# EUROPEAN PATENT APPLICATION

(11) **EP 4 752 662 A1**
(43) Date of publication of application: **03.06.2026**
(21) Application number: 24216885.4
(22) Date of filing: 02.12.2024
(51) Int. Cl.: G05D 1/229, G05D 1/242, G05D 1/246, G05D 1/648, G05D 105/15, G05D 107/20, G05D 109/10, A01D 34/00

(54) **ROBOTIC MOWER, SYSTEM AND METHOD FOR INSTALLATION OF A ROBOTIC MOWER**

(71) Applicant: Globe Technologies Sweden AB, 211 13 Malmö (SE)
(72) Inventor: ABRAHAMSSON, Oscar, Jönköping (SE)
(74) Representative: Zacco Sweden AB

(57) **Abstract**

The present disclosure relates to a method (100) for installation of a robotic mower. The method comprises autonomously navigating (S100) the robotic mower along at least one path; determining (S200) a plurality of waypoints along the at least one path; determining (S300) the external boundary of the work area and boundaries of any stay-out zones inside the work area based on the plurality of waypoints; generating (S400) a map of the work area, and storing (S500) the generated map. The present disclosure also relates to corresponding robotic mowers and systems.

## Description

### TECHNICAL FIELD

The present disclosure relates to robotic mowers. In particular, the present disclosure relates to automatic installation of robotic mowers.

### BACKGROUND ART

Robotic mowers that are used to mow a lawn in a work area is commonplace for both regular consumers and in industrial applications. Many robotic mowers are configured to mow the lawn autonomously within a boundary set by a user of the robotic mower.

However, installation of autonomous robotic mowers can be a burdensome and time-consuming procedure. This may involve the user burying cables indicating boundaries in the ground or involving a user moving around and manually indicate where the boundaries are, e.g. by manually navigating the robotic mower or moving with a mobile device.

### SUMMARY OF THE INVENTION

The present disclosure relates to a method for installation of a robotic mower arranged within an external boundary defining a work area for the robotic mower. The robotic mower comprises at least one sensor, the at least one sensor comprising at least one camera and/or at least one radar and/or at least one lidar. The method comprises autonomously navigating the robotic mower along at least one path. The method further comprises determining a plurality of waypoints along the at least one path based on sensor data from the at least one sensor, each waypoint relating to the external boundary or a boundary of a stay-out zone inside the work area that the robotic mower should not enter. The method also comprises determining the external boundary of the work area and boundaries of any stay-out zones inside the work area based on the plurality of waypoints. The method additionally comprises generating a map of the work area comprising the determined external boundary and determined boundaries of said any stay-out zones inside the work area. The method further comprises storing the generated map.

The disclosed method thereby provides the robotic mower with an automatic installation procedure that causes the robotic mower to autonomously map the work area and store the results in the form of a map for future use.

According to some examples, determining a plurality of waypoints comprises, upon determining a waypoint, generating a straight path in a random direction as the next path of the at least one path for the mower to autonomously navigate along.

This results in a random search strategy that quickly provides waypoints across a large portion of the work area compared to local search strategies. Furthermore, random search strategies are guaranteed to converge in the sense that eventually the robotic mower will have collected so many waypoints of each boundary that the work area can be classified as mapped. In other words, all boundaries have been sampled with to a predetermined resolution.

According to some examples, the at least one path comprises at least one preplanned path, wherein determining a plurality of waypoints comprises, upon determining a waypoint, selecting a segment of a preplanned path as the next path of the at least one path for the mower to autonomously navigate along.

A systematic search strategy using preplanned paths can be excellent for scanning rectangular work areas or follow boundaries to determine it fully before continuing the installation process. The latter can save a lot of time if combined with a random search strategy.

According to some examples, determining a plurality of waypoints further comprises manually adding at least one waypoint relating to the external boundary of the work area and/or at least one boundary of a stay-out zone.

This is very useful if a segment of a boundary is virtual or hard to detect, such as neighbouring lots with a common field of grass. It can also be a useful tool to speed up the installation process by reducing the time it takes to explore the work area.

According to some examples, determining the external boundary of the work area and boundaries of any stay-out zones comprises fitting at least one polygon or parametrized curve to the plurality of waypoints, the at least one polygon or parametrized curve defining the external boundary of the work area and boundaries of any stay-out zones.

In addition to defining the boundaries, if used alternatingly with determining new waypoints, polygons or parametrized curves can provide direction for the robotic mower to keep exploring.

According to some examples, the position of the mower is determined by real-time kinematic, RTK, global navigation satellite system, GNSS, positioning.

Adding RTK provides improved position accuracy, which translates to improved waypoint position accuracy, and hence a more accurate map of the work area.

According to some examples, generating the map comprises receiving user instructions arranged to indicate if a stay-out zone should be included in the generated map.

The user instructions can thereby take into account anticipated future changes, such as the removal of an obstacle or change in status of a stay-out zone to allow the robotic mower to enter the stay-out zone.

According to some examples, determining the plurality of waypoints comprises identifying at least one of: a boundary between grass and a non-grass ground material, a boundary between navigationally accessible grass and a navigationally inaccessible portion of the work area and a predetermined marker, based on the sensor data from the at least one sensor, and determining at least one waypoint based on the identified boundary and/or predetermined marker.

According to some examples, autonomously navigating the robotic mower comprises initiating an autonomous navigation stopping procedure based on a predetermined mapping criterion.

The predetermined mapping criterion thereby sets a condition for when the robotic mower has completed its task of mapping the work area and can proceed with finalizing the installation, such as completing the map generation and, optionally, navigation to a predetermined destination, such as a charging station.

According to some examples, the predetermined mapping criterion comprises a maximal spacing between waypoints along a boundary relating to the external boundary of the work area and/or at least one boundary of a stay-out zone.

The predetermined mapping criterion thereby ensures that each boundary has been sampled to a sufficient accuracy, as determined by the maximal spacing between waypoints.

According to some examples, determining the plurality of waypoints comprises determining at least two waypoints within a predetermined distance of each other based on the sensor data indicating at least one of: a boundary between grass and a non-grass ground material, a boundary between navigationally accessible grass and a navigationally inaccessible portion of the work area and a predetermined marker.

By determining at least two waypoints close to each other, the at least two waypoints can initially be assumed to belong to the same boundary. This can be used to begin generating a boundary between the at least two waypoints, which in turn can be used by the search strategy of the robotic mower to determine the next path in the at least one path to use. For example, if the robotic mower operates using a random search strategy, the partial boundary formed by the at least two waypoints can exclude random directions that would cause the robotic mover to try to navigate across the boundary. Likewise, a systematic search strategy can follow the partial boundary to explore it further.

According to some examples, autonomously navigating the robotic mower comprises navigating the robotic mower to probe at least one segment of a partial or potential boundary, wherein the at least one segment comprises a pair of nearest neighbour waypoints separated by a distance exceeding a predetermined threshold.

The robotic mower thereby systematically samples the partial or potential boundary in order to obtain more waypoints along it.

According to some examples, navigating the robotic mower to probe the at least one segment is triggered by the determined plurality of waypoints matching a work area mapping criterion, the work area mapping criterion relating to the robotic mower having classified a predetermined percentage of an area determined from waypoints of the plurality of waypoints relating to the external boundary as being either an area that should be mowed or a stay-out zone.

The robotic mower thereby switches from its current search strategy to focus on relatively portions of the discovered boundaries that require more sampling, i.e. more waypoints. This reduces the time it takes for the robotic mower to complete the installation process by only focusing on those areas that need further exploration.

The present disclosure further relates to a robotic mower. The robotic mower comprises a propulsion system and a set of sensors. The set of sensors comprises at least one camera and/or at least one radar and/or at least one lidar. The robotic mower further comprises a processor and a memory. The robotic mower also comprises a positioning determining device. The robotic mower is configured to carry out the method for installation of a robotic mower as described above and below.

The robotic mower implements the disclosed method for installation of a robotic mower and consequently has all the same technical effects and advantages.

The present disclosure also relates to a system for installation of a robotic mower. The system comprises a robotic mower as described above and below, and a real-time kinematic, RTK, base station arranged at a known location. The robotic mower is arranged to determine the position of the robotic mower by real-time kinematic, RTK, global navigation satellite system, GNSS, positioning using the RTK base station.

The system implements the disclosed method for installation of a robotic mower and consequently has all the same technical effects and advantages.

The system additionally benefits from the RTK base station, which ensures that the robotic mower can determine its position and the position of each waypoint with high precision.

### BRIEF DESCRIPTION OF THE DRAWINGS

Figures 1a-1c illustrate examples of the disclosed method for installation of a robotic mower;
Figure 1d illustrate example configurations of a robotic mower and associated examples of the disclosed method;
Figure 1e illustrates examples of structured work area mapping strategies;
Figure 1f illustrates examples of random work area mapping strategies;
Figure 2 illustrates a robotic mower according to the present disclosure; and
Figure 3 illustrates a system for installation of a robotic mower.

### DETAILED DESCRIPTION

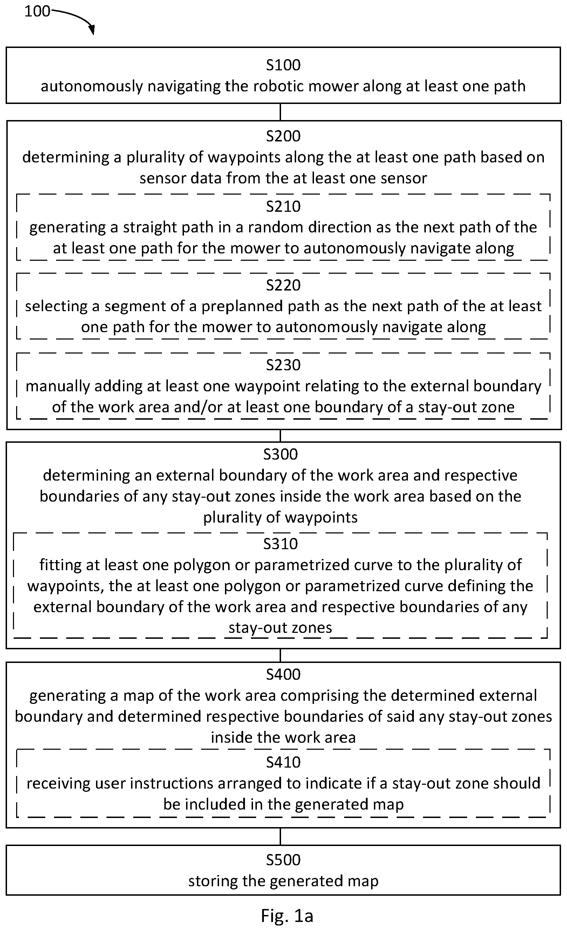

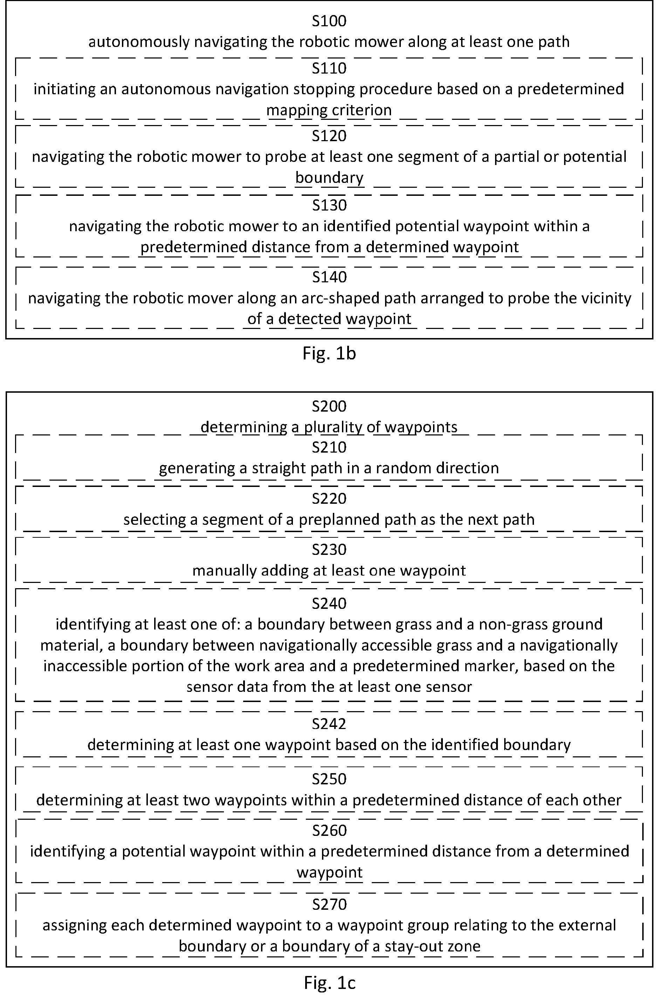

Figures 1a-1c illustrate examples of the disclosed method 100 for installation of a robotic mower arranged within an external boundary defining a work area for the robotic mower. The robotic mower comprises at least one sensor. The at least one sensor comprises at least one camera and/or at least one radar and/or at least one lidar.

One of the main ideas of the disclosed method is to have the robotic mower navigate autonomously and use sensor data to determine when it is about to cross into a region in which the robotic mower is not supposed to perform any cutting. These boundaries are indicated by waypoints and the robotic mower will navigate across the work area following a predetermined navigation strategy to collect more and more waypoints relating to the external boundary any boundary of a stay-out zone inside the work area that the robotic mower should not enter. When the mower has determined the external boundary to a sufficient accuracy and the work area has been traversed by the mower to a sufficient degree to allow the area to be classified as either a portion of the work area that should be cut or a stay-out zone, the mapping of the work area can be considered complete, upon which a map is stored and the mower has been successfully installed to mow the work area in the future. Implementation details will be illustrated further below.

The method comprises autonomously navigating S100 the robotic mower along at least one path. According to some examples, the position of the mower is determined by real-time kinematic, RTK, global navigation satellite system, GNSS, positioning. The precision of the robotic mower position is thereby increased, which translates directly to improved precision in determining waypoint locations and consequently also boundaries.

During the installation process, the robotic mower will navigate the work area autonomously to map it. In order to avoid potential errors in which parts of the work area that should be cut, the mapping of the work area may be performed without cutting during the mapping process. Thus, according to some examples, the robotic mower is configured to perform the automatic navigation without cutting. A further advantage is that performing the automatic navigation without cutting enables a user of the robotic mower to have the final say over where to cut, as will be described further below.

The search strategy that determines the at least one path can follow two principles, random search or a structured search. The two principles can also be combined, such as starting off with the at least one path being generated with a random search pattern and then switching to a structured search, such as scanning the work area row by row or follow identified boundaries to improve the resolution at which the boundaries are currently determined, upon meeting a predetermined criterion, such as having mapped two work area to a predetermined degree. The generation of the at least one path may also connect to how waypoints are determined and how boundaries are determined from the waypoints, as will be illustrated further below.

During navigation the robotic mower will at any given instance cover a portion of the work area. By tracking the covered portions of the work area, corresponding patches of the work area that has not been traversed can be determined. Thus, in some examples, autonomously navigating S100 the robotic mower along at least one path comprises storing traversed paths and/or areas covered during navigating along the traversed paths.

In case a random search strategy is used for generating at least one of said at least one path, the stored traversed paths and/or areas covered during navigation can be used to affect the possible random directions such that the robotic mower is guaranteed to attempt to visit a non-traversed area when autonomously navigating S100 along a future path of the at least one path. Similarly, the stored traversed paths and/or areas covered during navigation can be used by a systematic search strategy to cause the mower to explore non-traversed areas.

In other words, according to some examples, autonomously navigating S100 the robotic mower along at least one path comprises determining a path arranged to overlap with a non-traversed area based on the stored traversed paths and/or areas covered during navigation and navigating the robotic mower along the determined path.

The method further comprises determining S200 a plurality of waypoints along the at least one path based on sensor data from the at least one sensor, each waypoint relating to the external boundary or a boundary of a stay-out zone inside the work area that the robotic mower should not enter.

According to some examples, determining S200 the plurality of waypoints comprises identifying S240 at least one of: a boundary between grass and a non-grass ground material, a boundary between navigationally accessible grass, and a navigationally inaccessible portion of the work area and a predetermined marker, based on the sensor data from the at least one sensor, and determining S242 at least one waypoint based on the identified boundary and/or predetermined marker. Examples of non-grass comprises typical road material such as gravel or asphalt, and vegetation other than grass, such as flowers. Examples of predetermined markers comprise a predetermined colour, which could be applied to a grass area by spraying, and flags, cones or similar items that extend from the ground and constitute an apparent obstacle.

Sometimes the external boundary and/or a boundary of a stay-out zone can be difficult or impossible to detect, e.g. because a boundary is determined by a convention not correlating with physical characteristics. For instance, a boundary can be defined by contract. Thus, according to some examples, determining S200 a plurality of waypoints further comprises manually adding S230 at least one waypoint relating to the external boundary of the work area and/or at least one boundary of a stay-out zone. In some further examples, the manual adding S230 of the at least one waypoint is performed via a graphical user interface, GUI. The GUI may be a GUI of the robotic mower and/or a GUI of a mobile device, such as a mobile phone or a tablet.

The method also comprises determining S300 the external boundary of the work area and boundaries of any stay-out zones inside the work area based on the plurality of waypoints.

In some examples, all waypoints are determined S200 before determining S300 the external boundary of the work area and the boundaries of any stay-out zones inside the work area. In some other examples, the method alternates between determining S200 waypoints and determining S300 boundaries.

If two waypoints are sufficiently close to each other, there will be no way for the mower to pass between them without overlapping one or the other. Thus, waypoints sufficiently close to each other can be used to determine a boundary and also indicate during navigation S100 that some paths that pass between two such waypoints will inevitably lead to a stop between them. If a sufficient number of such waypoints surrounding a stay-out zone have been determined, the robotic mower can determine that the area of the stay-out zone is inaccessible. Any such areas determined as inaccessible can be classified as having been explored or traversed for the purposes of determining how much of the work area that has been processed. Likewise, when the external boundary has been sufficiently sampled, in other words when a sufficient number of waypoints have been determined that indicate that the robotic mower cannot escape because there are no two neighbouring waypoints that are so separate that they would allow the robotic mower to pass between them, the external boundary can be deemed sampled to a sufficient degree and consequently the shape of the whole work area has been determined.

The search strategy for navigating the robotic mower and determining the plurality of waypoints can follow either a random search strategy or a structured search strategy.

By search strategy we herein mean how the at least one path the robotic mower autonomously navigates S100 along is generated.

In a random search strategy, one or more of the at least one path is generated from a randomly chosen direction. In other words, according to some examples, determining S200 a plurality of waypoints comprises, upon determining a waypoint, generating S210 a straight path in a random direction as the next path of the at least one path for the mower to autonomously navigate S100 along. Each randomly chosen direction may be limited to at least one span of possible directions. For instance, if the robotic mower has arrived at a waypoint, the direction at which the robotic mower was travelling may be used to limit the at least one span of possible direction. In other words, in some examples the random direction is randomly chosen from at least one span of possible directions. According to some examples, one or more spans of possible directions are arranged to redirect the robotic mower in a direction excluding a span of possible directions about a forward direction of the robotic mower. By excluding a span of possible directions about the forward direction of the robotic mower, the robotic mower can be prevented from trying to move forward in the general direction it was previously travelling. In some examples, the span of possible directions about the forward direction of the robotic mower is set to one hundred and eighty degrees, thereby ensuring that the next generated path will be directed at least partially in the opposite direction to the direction the robotic mower had when it determined the current waypoint. The waypoints that the robotic mower has already determined can be used to exclude spans of possible directions. Thus, according to some aspects, the random direction is selected from one or more spans of possible directions based on one or more determined waypoints.

In a structured search strategy, one or more of the at least one path is generated based on a predetermined pattern and/or sampling strategy. According to some examples, the at least one path comprises at least one preplanned path, wherein determining S200 a plurality of waypoints comprises, upon determining a waypoint, selecting S220 a segment of a preplanned path as the next path of the at least one path for the mower to autonomously navigate S100 along. An example of a predetermined pattern is to navigate the search area in a line-by-line pattern. A sampling strategy is a structured search pattern configured to find additional waypoints in close proximity to a determined waypoint, for instance via arc-shaped paths. Thus, according to some examples, autonomously navigating S100 the robotic mower comprises navigating S140 the robotic mover along an arc-shaped path arranged to probe the vicinity of a detected waypoint.

In some examples, the robotic mower is configured to detect waypoints to the sides of the robotic mower. In other words, in some examples, determining S200 a plurality of waypoints comprises determining one or more waypoints within a side view angle of the robotic mower. By side view angle we herein mean an angle about a vector not aligned with a vector along a forward orientation of the robotic mower. In some examples, the side view angle comprises an angle about a vector perpendicular to the forward orientation of the robotic mower.

According to some examples, the robotic mower is configured to detect the waypoints by means of at least one of: one or more sideways-facing cameras, at least one radar and at least one lidar.

Detecting waypoints to the sides of the robotic mower enables the robotic mower to use those waypoints for navigation. Specifically, the robotic mower can follow the detected waypoints to map out the boundary to which they belong. In other words, according to some examples, autonomously navigating S100 the robotic mower along at least one path comprises navigating along a tangent and/or path determined based on a plurality of waypoints determined within a side view angle of the robotic mower.

In some examples, the robotic mower is configured to detect waypoints diagonally in front of the robotic mower. In other words, determining S200 a plurality of waypoints comprises determining one or more waypoints diagonally in front of the robotic mower. According to some examples, the at least one sensor is configured to detect the one or more waypoints diagonally in front of the robotic mower within a front view angle of the robotic mower. In some examples the at least one sensor comprises a forward-facing camera configured to detect the one or more waypoints diagonally in front of the robotic mower within a front view angle of the robotic mower. The determination that a detected waypoint is a waypoint may be performed by the sensor detecting the waypoint or by a control circuitry of the robotic mower. By front view angle we herein mean an angle about a vector aligned with a vector along a forward orientation of the robotic mower.

With the one or more waypoints diagonally in front of the robotic mower determined, the robotic mower can navigate along the one or more waypoints and update its trajectory as more and more waypoints are detected diagonally in front of the robotic mower. The robotic mower can thereby follow a boundary associated with the detected waypoints. In other words, according to some examples, autonomously navigating S100 the robotic mower along at least one path comprises navigating along a tangent and/or path determined based on the determined plurality of waypoints diagonally in front of the robotic mower.

According to some examples, the search strategy of the robotic mower comprises both a random search strategy and a structured search strategy. In some examples, the method comprises switching from one a random search strategy to a structured search strategy based on a predetermined criterion.

In one example the structured search strategy comprises filling in gaps in an insufficiently sampled boundary. Thus, according to some examples, autonomously navigating S100 the robotic mower comprises navigating S120 the robotic mower to probe at least one segment of a partial or potential boundary, wherein the at least one segment comprises a pair of nearest neighbour waypoints separated by a distance exceeding a predetermined threshold. The use of a random or structured search strategy can be triggered by a criterion. According to some examples, navigating S120 the robotic mower to probe the at least one segment is triggered by the determined S200 plurality of waypoints matching a work area mapping criterion, the work area mapping criterion relating to the robotic mower having classified a predetermined percentage of an area determined from waypoints of the plurality of waypoints relating to the external boundary as being either an area that should be mowed or a stay-out zone.

According to some examples, determining S300 the external boundary of the work area and boundaries of any stay-out zones comprises fitting S310 at least one polygon or parametrized curve to the plurality of waypoints, the at least one polygon or parametrized curve defining the external boundary of the work area and boundaries of any stay-out zones.

As described above, all waypoints can be determined S200 before or alternating with determining S300 the external boundary of the work area and the boundaries of any stay-out zones inside the work area. In order to facilitate determining the boundaries from the determined plurality of waypoints, it is helpful if each waypoint could be associated with a waypoint group relating to a boundary prior to determining said boundary. Thus, according to some examples, determining S200 a plurality of waypoints comprises assigning S270 each determined waypoint to a waypoint group, each waypoint group relating to the external boundary or a boundary of a stay-out zone. The assigning S270 of the waypoints may be performed by a clustering method, such as a neural network classifier, a support vector machine, SVM or similar.

Assigning S270 each determined waypoint to a waypoint group can be greatly helped by assuming that determined waypoints within a predetermined distance from each other belong to the same boundary and can thus be assigned, at least initially, to the same waypoint group. During the autonomous navigation S100 of the robotic mower and determining S200 the plurality of waypoints, the robotic mower can be configured to determine additional waypoints in close proximity to a determined waypoint. Thus, according to some examples, determining S200 the plurality of waypoints comprises determining S250 at least two waypoints within a predetermined distance of each other based on the sensor data indicating at least one of: a boundary between grass and a non-grass ground material, a boundary between navigationally accessible grass and a navigationally inaccessible portion of the work area and a predetermined marker.

According to some further examples, the at least two waypoints are determined simultaneously. In other words, the at least two waypoints are determined simultaneously from the sensor data.

According to some examples, the robotic mower is arranged to search for a potential waypoint within a predetermined distance from a determined waypoint. Depending on how the robotic mower is configured, this can be done in multiple way. In some examples, at least one sensor, such as a camera, is configured be rotated with respect to the robotic mower. The at least one sensor can thereby scan the vicinity of the determined waypoint in search for a potential waypoint within said predetermined distance from the determined waypoint. In another example, the robotic mower is configured to be able to rotate on the spot. In this example, the method further comprises searching for a potential waypoint by rotating on the spot, which would allow the at least one sensor to detect the vicinity of the determined waypoint.

The robotic mower can also be configured to move in a manner that explores the vicinity of the determined waypoint in an attempt to determine more waypoints. Thus, according to some examples, determining S200 a plurality of waypoints further comprises identifying S260 a potential waypoint within a predetermined distance from a determined S200 waypoint; autonomously navigating S100 the robotic mower further comprises navigating S130 the robotic mower to the identified S260 potential waypoint, and determining S200 a plurality of waypoints further comprises determining S262 if the identified S260 potential waypoint should be added to the determined S200 a plurality of waypoints.

In some further examples, autonomously navigating S100 the robotic mower further autonomously navigating S100 the robotic mower towards a point within a predetermined distance from the determined S200 waypoint. The point can be approached on a straight line or along an arc. According to some further examples, the autonomously navigating S100 the robotic mower towards the point comprises backing away from the determined S200 waypoint prior to autonomously navigating S100 the robotic mower towards the point.

The method additionally comprises generating S400 a map of the work area comprising the determined external boundary and determined boundaries of said any stay-out zones inside the work area.

Sometimes the stay-out zones are temporary and need not be included in the final map. Thus, according to some examples, generating S400 the map comprises receiving S410 user instructions arranged to indicate if a stay-out zone should be included in the generated map. In some further examples the user is prompted to approve each stay-out zone via a graphical user interface, GUI, at the robotic mower or a computer program at a mobile device, such as a mobile phone or tablet.

The method further comprises storing S500 the generated map.

According to some examples, autonomously navigating S100 the robotic mower comprises initiating S110 an autonomous navigation stopping procedure based on a predetermined mapping criterion. According to some examples, the predetermined mapping criterion comprises a maximal spacing between waypoints along a boundary relating to the external boundary of the work area and/or at least one boundary of a stay-out zone.

According to some examples, the autonomous navigation stopping procedure comprises at least one of: autonomously navigating to a predetermined location within the work area, such as a charging station, transmitting a message to a user that the robotic mower has been installed, and changing an operational mode of the robotic mower, such as powering off or entering a low-power mode.

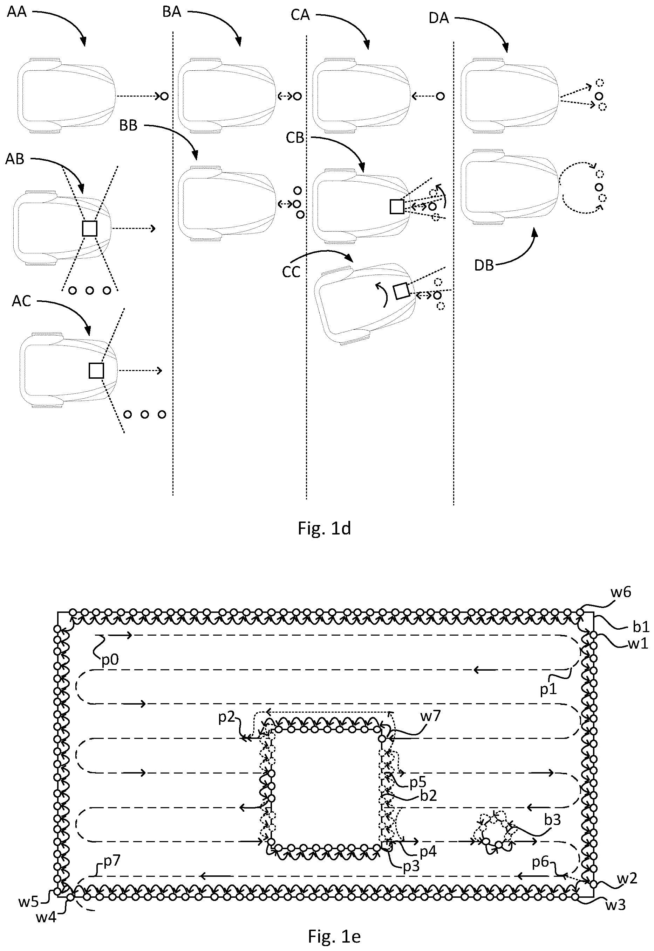

Figure 1d further illustrates some of the examples discussed above in relation to figures 1a-1c. In example AA a robotic mover is autonomously navigating towards a boundary represented here by a potential waypoint. In some examples, the robotic mower is configured to detect waypoints to the side of the robotic mower, as discussed further above in relation to figures 1a-1c. Example AB illustrates such a robotic mower, wherein the robotic mower is navigating based on the detected waypoints. According to some examples, the robotic mower is configured to detect waypoints diagonally in front of the robotic mower, as discussed further above in relation to figures 1a-1c. Example AC illustrates such a robotic mower, wherein the robotic mower is navigating based on the detected waypoints.

Once at the boundary, the robotic mover determines one BA or more BB waypoints based on sensor data indicating that the robotic mower has reached a boundary.

In some examples the robotic mower is configured to look for additional waypoints upon determining the one BA or more BB waypoints. According to some examples, one or more sensors of the at least one sensor can be rotated with respect to the robotic mover, as illustrated in example CB, in order to detect additional waypoints within a predetermined distance from the already detected waypoint(s). In example CC, the robotic mower is configured to rotate on the spot. By changing direction slightly with respect to the already detected waypoints(s), additional waypoints within a predetermined distance from the detected waypoints(s) can be determined.

In some examples, the robotic mower is configured to probe the vicinity of the determined waypoint(s). Thus, in some further examples, autonomously navigating S100 the robotic mower further autonomously navigating S100 the robotic mower towards a point within a predetermined distance from the determined S200 waypoint. The point can be approached on a straight line, as illustrated in example DA, or along an arc, as illustrated in example DB. According to some further examples, the autonomously navigating S100 the robotic mower towards the point comprises backing away from the determined S200 waypoint prior to autonomously navigating S100 the robotic mower towards the point, as illustrated in example CA.

Figure 1e illustrates examples of structured work area mapping strategies. In the illustrated examples, a line-by-line search strategy is employed. For non-limiting illustrated purposes, the work area is illustrated with a rectangular external boundary b1 and two stay-out zones having boundaries b2 and b3, respectively. For a robotic mower starting at point p0, the robotic mower will autonomously navigate along the line segment path that will take it to the external boundary b1, where it will determine at least one waypoint w1. Depending on the search strategy, at least the following two options are possible: in a first example, the robotic mower is configured to keep exploring a boundary upon determining at least one waypoint; in a second example, the robotic mower is configured to resume the line-by-line search.

Starting by illustrating the first example, wherein the robotic mower is configured to keep exploring a boundary upon determining at least one waypoint. In this example, the robotic mower is illustrated as probing the boundary in arc-shaped paths, but as discussed above in relation to Figs. 1a-1d, other examples are also possible. The robotic mower will repeatedly navigate autonomously S100 towards a point within a predetermined distance from the last determined S200 waypoint. This will in the illustrated example take the robotic mower all the way around the external boundary from waypoint w1 to waypoints w2, w3, w4, w5 and w6, with many more waypoints in-between, the number of which will be determined by the predetermined distance. Upon reaching waypoint w6, the robotic mower will encounter waypoint w1 once again, which has already been determined. The robotic mower can therefore determine that the boundary has been sampled to the accuracy set by the predetermined distance, and it can thus continue the line-by-line search from point p1, which would be the next line.

Eventually, the robotic mower would encounter boundary b2 and determine the at least one waypoint w7. The robotic mower would once again navigate along a plurality of arch-shaped paths along the boundary b2 until it arrived back within a predetermined distance from waypoint w7. Upon doing so, the robotic mower can resume the line-by-line search. Since the stay-out zone indicated by the boundary b2, the robotic mower can navigate around the boundary to point p2 and continue the line-by-line search.

As the robotic mower comes to the bottom of boundary b2, there are two options of how to continue the line-by-line search. Either the robotic mower returns to point p5 and continue from there, skipping to the next line when boundary b1 or b2 is encountered, or the mower continues from point p4 and returns to map the area between point p4 and p5 at a later stage. Either way, the robotic mower will encounter boundary b3 and determine waypoints along the boundary b3 in the same manner as boundary b2.

Continuing with the line-by-line search, the robotic mower will eventually reach point p7. At this point, the entire work area has been either traversed or can be classified as belonging to a stay-out zone. The external boundary b1 of the work area and the boundaries b2, b3 of the stay-out zones can be determined S300 as more and more waypoints are determined S200, or as a separate step after all waypoints have been determined S200. In some examples, determining the boundaries comprises fitting S310 at least one polygon or parametrized curve to the plurality of waypoints, the at least one polygon or parametrized curve defining the external boundary of the work area and boundaries of the stay-out zones.

The robotic mower generates S400 a map of the work area comprising the determined external boundary and the determined boundaries of the stay-out zones inside the work area, and stores S500 the generated map.

In the second example, wherein the robotic mower is configured to resume the line-by-line search, the robotic mover can probe the top of boundary b2 in arc-shaped paths in order to determine when it has reached the beginning, at point p2, of the next segment of the line-by-line path. In other words, the robotic mower only samples along any boundary that it encounters as long as it takes to get back to the next segment in the line-by-line path. In Fig. 1e, the waypoints of boundaries b2 and b3 that get determined in the initial line-by-line search are indicated by solid circles, while those that have to be determined at a later stage are indicated by dashed circles. As in the case of the first example, upon reaching point p3, the robotic mower either continues at point p4 or point p5, and will eventually arrive at point p7. The main difference between this second example and the first example is that the boundaries b1, b2 of the stay-out zones do not yet have sufficient waypoints to determine S300 the boundaries. Thus, the robotic mower is further configured to probe the boundaries in the vicinity of determined waypoints until sufficient waypoints have been determined to allow the boundaries to be determined based on the waypoints.

The robotic mower generates S400 a map of the work area comprising the determined external boundary and the determined boundaries of the stay-out zones inside the work area, and stores S500 the generated map.

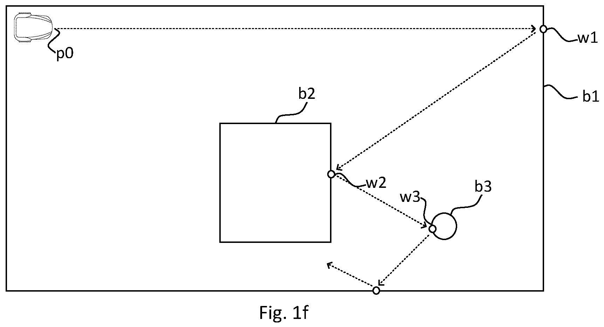

Figure 1f illustrates examples of random work area mapping strategies. The work area has an external boundary b1 and two stay-out zones with boundaries b1 and b2.

In the illustrated example, the robotic mower is arranged within the external boundary at point p0. The robotic mower is configured to autonomously navigate S100 along at least one path. In the illustrated example, the initial path is chosen straight ahead from the initial position at which the robotic mower is arranged. In some other examples, the initial path is a path in a random direction.

The robotic mower determines S200 a plurality of waypoints along the at least one path based on sensor data from the at least one sensor, each waypoint relating to the external boundary or a boundary of a stay-out zone inside the work area that the robotic mower should not enter. Determining S200 the plurality of waypoints comprises, upon determining a waypoint, generating S210 a straight path in a random direction as the next path of the at least one path for the mower to autonomously navigate S100 along.

In other words, when the robotic mower arrives at a boundary and determines a waypoint, it generates a new path to follow. This generated path is taken in a random direction. The possible range of angles can be limited based on the previous path in order to reduce the likelihood that the robotic mower tries to move forward and immediately runs into the same boundary that it has already found.

In the illustrated example, the robotic mover first encounters waypoint w1 of the external boundary, upon which a random direction is chosen that takes the robotic mower on a path to a waypoint w2 at a boundary of one of the stay-out zones. A new random path is generated taking the robotic mower to waypoint w3 at the boundary of the other stay-out zone. The robotic mower will continue to traverse the work area until the work area has been sufficiently covered and enough waypoints have been found to determine all boundaries. Alternatively, the robotic mower switches to a systematic search strategy when it meets a predetermined criterion, as has been discussed above in relation to Figures 1a-1c.

The robotic mower determines S300 the external boundary of the work area and boundaries of the stay-out zones inside the work area based on the plurality of waypoints. This can be done gradually, as more and more waypoints are determined, or as a separate step when the plurality of waypoints have been determined.

The robotic mover then generates S400 a map of the work area comprising the determined external boundary and determined boundaries of said any stay-out zones inside the work area, and stores S500 the generated map.

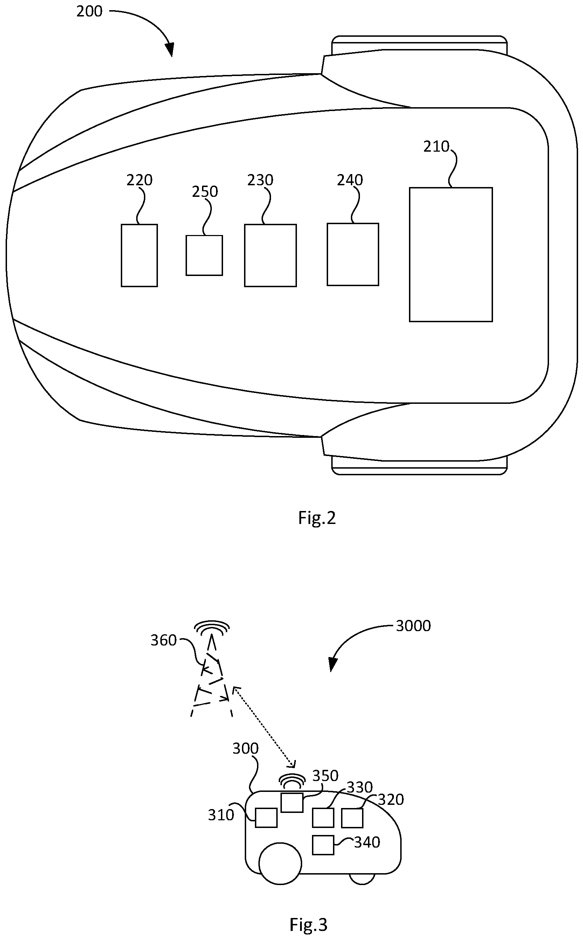

Figure 2 illustrates a robotic mower 200 according to the present disclosure. The robotic mower comprises a propulsion system 210. The robotic mower further comprises a set of sensors 220. The set of sensors comprising at least one camera and/or at least one radar and/or at least one lidar. The robotic mower also comprises a processor 230 and a memory 240. The robotic mower additionally comprises a positioning determining device 250. The robotic mower is configured to carry out the method 100 for installation of a robotic mower as described above and below.

According to some examples, the robotic mower is configured to determine the position of the mower by real-time kinematic, RTK, global navigation satellite system, GNSS, positioning.

Figure 3 illustrates a system 3000 for installation of a robotic mower 300. The system comprises a robotic mower 300 according to the present disclosure, and a real-time kinematic, RTK, base station 360 arranged at a known location. The robotic mower is arranged to determine the position of the robotic mower by real-time kinematic, RTK, global navigation satellite system, GNSS, positioning using the RTK base station.

The present disclosure further relates to a computer program product for installation of a robotic mower arranged within an external boundary defining a work area for the robotic mower comprising a non-transitory computer-readable storage medium having thereon a computer program comprising program instructions, the computer program being loadable into a processor and configured to cause the processor to perform the method for installation of a robotic mower arranged within an external boundary defining a work area for the robotic mower, as described above and below.

The present disclosure also relates to a computer program comprising program instructions which, when executed by a processor of a robotic mower according to the present disclosure, causes the robotic mower to carry out the method for installation of a robotic mower arranged within an external boundary defining a work area for the robotic mower, as described above and below.

## Claims

1. Method for installation of a robotic mower arranged within an external boundary defining a work area for the robotic mower, the robotic mower comprising at least one sensor, the at least one sensor comprising at least one camera and/or at least one radar and/or at least one lidar, the method comprising
- autonomously navigating (S100) the robotic mower along at least one path,
- determining (S200) a plurality of waypoints along the at least one path based on sensor data from the at least one sensor, each waypoint relating to the external boundary or a boundary of a stay-out zone inside the work area that the robotic mower should not enter,
- determining (S300) the external boundary of the work area and boundaries of any stay-out zones inside the work area based on the plurality of waypoints,
- generating (S400) a map of the work area comprising the determined external boundary and determined boundaries of said any stay-out zones inside the work area, and
- storing (S500) the generated map.

2. The method according to claim 1, wherein determining (S200) a plurality of waypoints comprises, upon determining a waypoint, generating (S210) a straight path in a random direction as the next path of the at least one path for the mower to autonomously navigate (S100) along.

3. The method according to claim 1 or 2, wherein the at least one path comprises at least one preplanned path, wherein determining (S200) a plurality of waypoints comprises, upon determining a waypoint, selecting (S220) a segment of a preplanned path as the next path of the at least one path for the mower to autonomously navigate (S100) along.

4. The method according to any of the preceding claims, wherein determining (S200) a plurality of waypoints further comprises
- manually adding (S230) at least one waypoint relating to the external boundary of the work area and/or at least one boundary of a stay-out zone.

5. The method according to any of the preceding claims, wherein determining (S300) the external boundary of the work area and boundaries of any stay-out zones comprises
- fitting (S310) at least one polygon or parametrized curve to the plurality of waypoints, the at least one polygon or parametrized curve defining the external boundary of the work area and boundaries of any stay-out zones.

6. The method according to any of the preceding claims, wherein the position of the mower is determined by real-time kinematic, RTK, global navigation satellite system, GNSS, positioning.

7. The method according to any of the preceding claims, wherein generating (S400) the map comprises
- receiving (S410) user instructions arranged to indicate if a stay-out zone should be included in the generated map.

8. The method according to any of the preceding claims, wherein determining (S200) the plurality of waypoints comprises
- identifying (S240) at least one of: a boundary between grass and a non-grass ground material, a boundary between navigationally accessible grass and a navigationally inaccessible portion of the work area and a predetermined marker, based on the sensor data from the at least one sensor, and
- determining (S242) at least one waypoint based on the identified boundary and/or predetermined marker.

9. The method according to any of the preceding claims, wherein autonomously navigating (S100) the robotic mower comprises
- initiating (S110) an autonomous navigation stopping procedure based on a predetermined mapping criterion.

10. The method according to claim 9, wherein the predetermined mapping criterion comprises a maximal spacing between waypoints along a boundary relating to the external boundary of the work area and/or at least one boundary of a stay-out zone.

11. The method according to any of the preceding claims, wherein determining (S200) the plurality of waypoints comprises
- determining (S250) at least two waypoints within a predetermined distance of each other based on the sensor data indicating at least one of: a boundary between grass and a non-grass ground material, a boundary between navigationally accessible grass and a navigationally inaccessible portion of the work area and a predetermined marker.

12. The method according to any of the preceding claims, wherein autonomously navigating (S100) the robotic mower comprises
- navigating (S120) the robotic mower to probe at least one segment of a partial or potential boundary, wherein the at least one segment comprises a pair of nearest neighbour waypoints separated by a distance exceeding a predetermined threshold.

13. The method according to claim 12, wherein navigating (S120) the robotic mower to probe the at least one segment is triggered by the determined (S200) plurality of waypoints matching a work area mapping criterion, the work area mapping criterion relating to the robotic mower having classified a predetermined percentage of an area determined from waypoints of the plurality of waypoints relating to the external boundary as being either an area that should be mowed or a stay-out zone.

14. A robotic mower (200, 300), the robotic mower comprising
- a propulsion system (210, 310),
- a set of sensors (220, 320), the set of sensors comprising at least one camera and/or at least one radar and/or at least one lidar,
- a processor (230, 330),
- a memory (240, 340), and
- a positioning determining device (250, 350),
wherein the robotic mower is configured to carry out the method (100) for installation of a robotic mower according to any of claims 1-13.

15. A system (3000) for installation of a robotic mower (200,300), the system comprising
- a robotic mower (200, 300) according to claim 14, and
- a real-time kinematic, RTK, base station (360) arranged at a known location, wherein the robotic mower is arranged to determine the position of the robotic mower by real-time kinematic, RTK, global navigation satellite system, GNSS, positioning using the RTK base station.
